# EUROPÄISCHE PATENTSCHRIFT

(11) **EP 0 787 273 B1**
(45) Veröffentlichungstag und Bekanntmachung des Hinweises auf die Patenterteilung: **23.06.1999**
(21) Anmeldenummer: 95934581.0
(22) Anmeldetag: 30.10.1995
(51) Int. Cl.: F24F 11/00, G05D 23/19

(54) **VORRICHTUNG UND VERFAHREN ZUR KLIMAREGELUNG IN EINEM TEXTILMASCHINEN AUFWEISENDEN KLIMATISIERTEN RAUM**
DEVICE AND METHOD FOR AIR CONDITIONING CONTROL IN AN AIR-CONDITIONED ROOM CONTAINING TEXTILE MACHINES
DISPOSITIF ET METHODE DE REGULATION DU CONDITIONNEMENT D'AIR DANS UNE PIECE CLIMATISEE CONTENANT DES MACHINES TEXTILES

(30) Priorität: 07.11.1994 CH 331294
(43) Veröffentlichungstag der Anmeldung: 06.08.1997
(73) Patentinhaber: ZELLWEGER LUWA AG, 8610 Uster (CH)
(72) Erfinder: MEYER, Urs, CH-8172 Niederglatt (CH)
(74) Vertreter: Patentanwälte Schaad, Balass, Menzl & Partner AG
(86) Internationale Anmeldenummer: CH9500252
(87) Internationale Veröffentlichungsnummer: WO9614542

(56) Entgegenhaltungen:
- EP-A- 0 455 509
- EP-A- 0 518 322
- WO-A-89/12269
- US-A- 3 777 806

## Beschreibung

Die Erfindung betrifft eine Vorrichtung und ein Verfahren zur Klimaregelung in einem Textilmaschinen aufweisenden klimatisierten Raum eines Textilbetriebes nach dem Oberbegriff des Patentanspruchs 1 bzw. 20.

In Spinnereibetrieben sind Klimaanlagen zur Regelung der Temperatur und der relativen Feuchte im mit verschiedenen Textilmaschinen ausgerüsteten Spinnsaal eine absolute Voraussetzung für den normalen Produktionsbetrieb. Bei der Verarbeitung von Fasern zu Garn soll eine relative Feuchte in einem schmalen Bandbreitenbereich von 40 %rF bis 50 %rF eingehalten werden, während die Verarbeitung von Garnen zu Geweben und Gestricken eine eher höhere Luftfeuchtigkeit von 60 %rF bis 80 %rF verlangt. Es darf jedoch keinesfalls zu Kondensation kommen, und andererseits soll die Luftfeuchtigkeit auch nicht kurzzeitig unterhalb 30 %rF fallen. Da bekanntlich die relative Feuchte und die Temperatur gemäss dem sogenannten Mollier-Diagramm in Beziehung zueinander stehen, ist es ferner erforderlich, dass die Temperatur der Raumluft ebenfalls in einer engen Bandbreite von der Klimaanlage kontrolliert wird. Die höchsten Anforderungen an die Klimatisierung stellt der Verbund von modernen Ringspinnmaschinen und Spulmaschinen. Beide Maschinen sind unmittelbar nebeneinander im Spinnsaal aufgestellt, verlangen aber eine unterschiedliche Klimatisierung. Die Ringspinnmaschine ist auf die relative Feuchte der Luft besonders empfindlich: eine Luftfeuchtigkeit von über 50 %rF führt zur Bildung von Faserwickeln an den Streckwerkzylindern und Oberwalzen des Streckwerks. Andererseits fördert eine zu trockene Umgebung die Bildung von Faserflug, der an verschiedenen Orten an der Ringspinnmaschine Störungen verursachen kann. Die Spulmaschine bevorzugt ihrerseits ein schmiegsames Garn mit geringer Krängelneigung, und damit ein eher feuchtes Klima. Bei dieser Maschine geht es darum, das Aufschieben von Fasern entlang des Fadens und das Entstehen von Fadenschlaufen und Krängeln zu vermeiden, die zu Störungen in der Spulmaschine führen können.

Auch bezüglich der Luftbelastung stellt der Verbund von Ringspinnmaschine und Spulmaschine hohe Anforderungen an die Klimatisierung. Die Ringspinnmaschine gibt mit ihren offenen Spinnstellen dauernd Fasern an die Umgebung ab. Zum gesundheitlichen Schutz des Bedienpersonals muss die Umgebungsluft deshalb häufig gewechselt werden. Beide Maschinen führen ausserdem eine beträchtliche Verlustleistung an die Umgebung ab, so dass die Luft im Spinnsaal grundsätzlich von der Klimaanlage gekühlt werden muss, sei es durch Befeuchten oder zusätzlich noch durch Kühlaggregate.

Mit der Einführung von Hochleistungs-Ringspinnmaschinen, die über 1000 Spindeln und Spindeldrehzahlen von 20'000 Umdrehungen/min. und mehr aufweisen, sind unter den genannten Bedingungen mehr als 25 Luftwechsel pro Stunde notwendig. Die bestehenden Klimaanlagen sind dadurch bis an ihre Grenzen beansprucht. Insbesondere haben Untersuchungen gezeigt, beispielsweise in der anfangs 1994 veröffentlichten Dissertation "Energiesparmassnahmen in einer vollinformatisierten Baumwollspinnerei" von Rolf Friedrich Bergrath an der ETH Zürich (Diss.ETH-Nr. 10657), dass die Regelkreise schnellen Änderungen in den Luftkreisläufen nur ungenügend zu folgen vermögen. Dies führt zu unkontrollierbaren Schwingungen und Ausschlägen in der Temperatur und der relativen Feuchte der Raumluft, die innert Minuten eine grosse Anzahl von Fadenbrüchen oder Wickeln auf den Spinnmaschinen verursachen können, so dass diese unter Umständen sogar abgeschaltet werden müssen.

Aus der EP 0 455 509 A1 ist eine Vorrichtung zur Regelung einer Komfort-Klimatisierung bekannt, welche dazu dient den thermischen Komfort in Büroräumlichkeiten zu regeln. Diese Vorrichtung misst die Temperatur und die relative Feuchtigkeit in einem Raum, berechnet daraus nach den von P.O. Fanger aufgestellten Gesetzmässigkeiten eine mittlere Strahlungswärme, und berechnet daraus für eine nachgeschaltete Heizungs- und Kühlungsvorrichtung eine Solltemperatur. Der Raum wird entsprechend dieser Solltemperatur geheizt oder gekühlt, um dadurch eine für den Menschen angenehme Komfort-Klimatisierung zu bewirken. Diese bekannte Vorrichtung weist den Nachteil auf, dass nur die Temperatur regelbar ist, und dass die Vorrichtung nur für sehr langsam ablaufende Prozesse wie eine Gebäudeklimatisierung geeignet ist. Derartige Vorrichtungen erlauben nur eine geringe Anzahl Luftwechsel pro Stunde und sind daher ungeeignet für eine schnell arbeitende Klimaregelung mit einer grösseren Anzahl Luftwechsel von drei und mehr Luftwechsel pro Stunde, wobei zudem unabhängig voneinander vorgebbare Werte bezüglich Temperatur und relativer Feuchte der Luft in einem schmalen Bandbreitenbereich von beispielsweise ± 5% einzuhalten sind.

Aus der EP 0 518 322 A2 ist eine weitere Heiz- und Ventilationsvorrichtung zur Gebäudeklimatisierung bekannt. Diese Vorrichtung erlaubt die Temperatur in einem Raum zu messen und die Heizungs- und Lüftungsvorrichtung derart anzusteuern, dass eine vorgebbare Raumtemperatur eingehalten wird. Diese Vorrichtung ist ebenfalls für nur sehr langsam ablaufende Prozesse mit geringen Luftwechseln geeignet. Zudem ist die Luftfeuchtigkeit nicht beeinflussbar. Diese Vorrichtung ist somit ebenfalls nicht geeignet für eine schnell arbeitende Klimaregelung, bei welcher sowohl die Temperatur als auch die Luftfeuchtigkeit auf einem vorgebbaren Wert zu halten ist.

Aus der Druckschrift US- A- 3 777 806 ist eine weitere Klimatisierungsvorrichtung bekannt, welche dem klimatisierten Betrieb von Textilmaschinen erlaubt. Ziel der Druckschrift US- A- 3 777 806 ist eine Mehrzahl von Zonen unterschiedlich zu klimatisieren. Um dies zu erzielen sind am Standort der Maschinen Ventile sowie eventuelle Sensoren angeordnet, um jeden Standort individuell zu klimatisieren.

Der vorliegenden Erfindung liegt deshalb die Aufgabe zugrunde, eine Vorrichtung zur Klimaregelung in einem Textilmaschinen, insbesondere Ringspinn- und Spulmaschinen, aufweisenden klimatisierten Raum zu bieten, die eine stabile und genaue Regelung der Temperatur und der relativen Feuchte der Raumluft unter allen Betriebsbedingungen gewährleistet.

Diese Aufgabe wird durch eine Vorrichtung mit den Merkmalen des Patentanspruchs 1 und durch ein Verfahren mit den Merkmalen des Patentanspruchs 20 gelöst.

Die Erfindung hat den grossen Vorteil, dass auf an und für sich einfache, jedoch sehr wirksame Art eine stabile und genügend genaue Regelung der Temperatur und der relativen Feuchte im klimatisierten Raum erreicht wird. Die erfindungsgemässe Lösung lässt sich damit ohne weiteres in bestehenden Klimaanlagen anwenden, so dass ein Austausch durch eine neue Klimaanlage nicht erforderlich ist. Des weiteren kann mit der erfindungsgemässen Vorrichtung sehr haushälterisch mit der erforderlichen Energie umgegangen werden, da die Luftdurchsätze auf ein absolut notwendiges Minimum herabgesetzt werden können.

Weitere Vorteile der Erfindung folgen aus den abhängigen Ansprüchen und aus der nachstehenden Beschreibung. Dort wird die Erfindung anhand der in den schematischen Zeichnungen dargestellten Beispielen näher erläutert. Es zeigt:
- Fig. 1: eine schematische Darstellung der Klimaanlage für einen klimatisierten Raum eines Textilbetriebes,
- Fig. 2: eine prinzipielle Darstellung zur Verdeutlichung des Regelkonzeptes der Klimaanlage,
- Fig. 3: ein Blockschaltbild für eine erste Ausführungsform der Klimaregelung,
- Fig. 4: ein Blockschaltbild für eine zweite Ausführungsform der Klimaregelung,
- Fig. 5: eine detaillierte Darstellung der Mischeinheit, und
- Fig. 6: Beispiele von Fuzzy-Mengen zur Steuerung der Klimaanlage.

In den Figuren sind für dieselben Elemente jeweils dieselben Bezugszeichen verwendet worden, so dass erstmalige Erklärungen zu diesen Elementen für alle Figuren gültig sind.

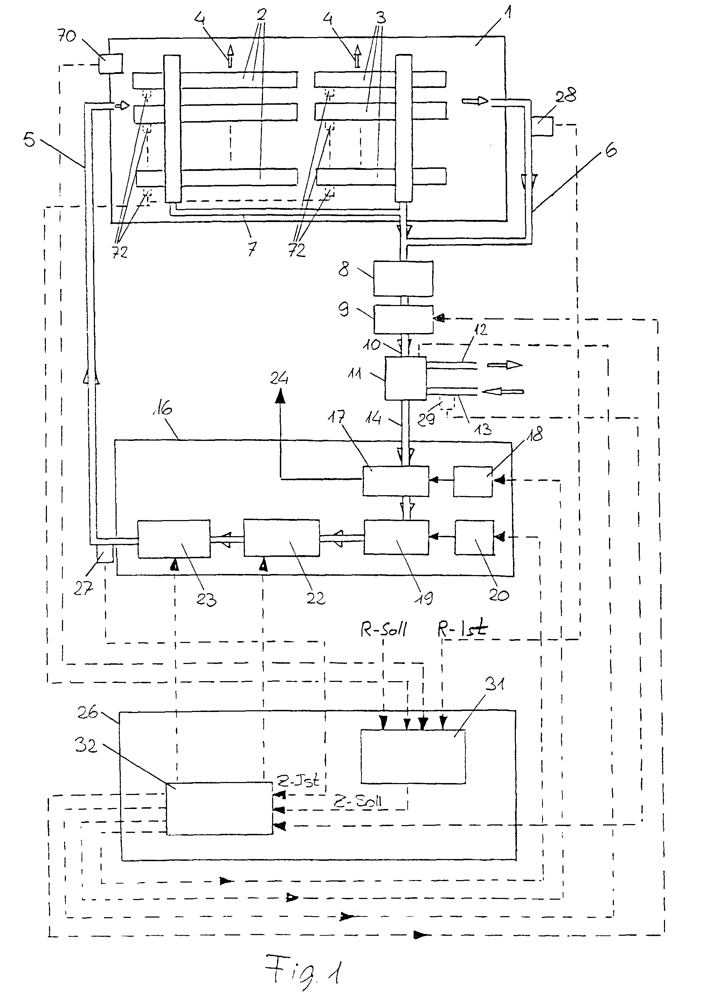

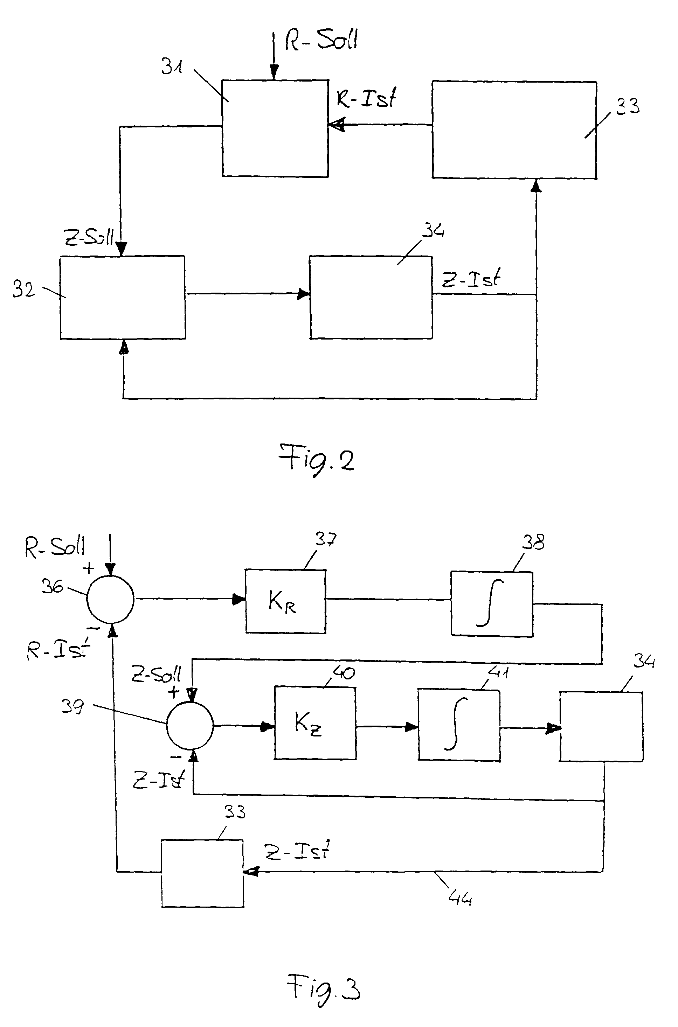

In Figur 1 ist der prinzipielle Aufbau der erfindungsgemässen Klimaregelung in einem klimatisierten Raum 1 mit mehreren Ringspinnmaschinen 2 in Verbund mit Spulmaschinen 3 aufgezeigt. Die durch die Verlustleistung der Spinn- und Spulmaschinen 2 und 3 in den Raum 1 abgestrahlte Abwärme ist mit Pfeilen 4 angedeutet. Der klimatisierte Raum 1 wird mit frisch klimatisierter Zuluft über einen Zuluftkanal 5 versorgt, und von mit Flug und Staub kontaminierter Abluft einerseits über einen Abluftkanal 6 und andererseits über einen Maschinenabluftkanal 7, der an den hier nicht weiter dargestellten Absaugaggregaten und Wanderreinigern angeschlossen ist, entsorgt. Über eine aus Vor- und Nachfilter bestehende Filtereinheit 8 und ein nachfolgendes Gebläse 9 sind der Abluftkanal 6 und der Maschinenabluftkanal 7 zusammengeführt und über einen Verbindungskanal 10 mit einer als Umluftklappe ausgebildeten und motorisch verstellbaren Mischeinheit 11 verbunden (für nähere Details vergleiche Figur 5). Die Mischeinheit 11 weist einen Ausblaskanal 12 und einen Aussenluftkanal 13 auf, mit welcher einerseits die kontaminierte Abluft und Wasserdampf aus dem Kreislauf entfernt und andererseits frische Aussenluft angesaugt werden kann. Die Mischeinheit 11 ist sodann über einen Mischluftkanal 14 mit einer Klimaanlage 16 verbunden. Die Klimaanlage 16 weist in der aufgeführten Reihenfolge aneinander angeschlossen ein Kühlaggregat 17 mit einem einstellbaren Ventil 18, einen Luftwäscher 19 mit einer drehzahlveränderbaren Pumpe 20, eine Heizung 22 und ein Gebläse 23 auf. Die verschiedenen Verbindungskanäle zwischen diesen Elementen sind mit Doppellinien und Pfeilen gekennzeichnet. Die vom Kühlaggregat 17 abgeführte Abwärme ist mit einem Pfeil 24 angedeutet. Das Gebläse 23 ist als letztes Element der Klimaanlage 16 mit dem Zuluftkanal 5 verbunden. Mit gestrichelten Linien sind die Signalverbindungen zwischen einem Prozessrechner 26 und Sensoren 27 am Zuluftkanal 5 und Sensoren 28 am Abluftkanal 6 angedeutet. Die elektrischen Steuerleitungen zum Gebläse 8, zur Mischeinheit 11 und zu den Stellgliedern der Klimaanlage 16 sind durch gestrichelte Linien gekennzeichnet. Gestrichelt ist ebenfalls angedeutet, dass Sensoren 29 am Aussenluftkanal 13 vorgesehen sein können. Die Sensoren 27, 28 und 29 dienen zur Messung der Temperatur und der relativen Feuchte. Mindestens der Temperatursensor für die Zuluft weist einen Halbleiter-Widerstand (auch NTC-Widerstand genannt) oder einen Widerstandsdraht (aus sogenanntem Pt100) mit geringer Masse auf, und hat somit eine schnelle Reaktionszeit von wenigen Sekunden. Feuchtesensoren vom kapazitiven oder resistiven Typ haben eine genügend kleine Zeitkonstante, um schnelle Änderungen der Zuluft erfassen zu können, weshalb diese hier bevorzugt werden. Für die Sensoren 28 im Abluftkanal 6 ist eine sehr schnelle Reaktionszeit nicht unbedingt erforderlich, so dass dort langsamere Sensoren durchaus eingesetzt werden können. Der Prozessrechner 26 weist im wesentlichen einen als Raumluftregler bezeichneten ersten Regelkreis 31 und einen als Zuluftregler bezeichneten zweiten Regelkreis 32 auf, deren Funktion näher mit Bezug auf die Figuren 2 bis 4 erklärt wird.

Das Regelkonzept der Klimaanlage 16 wird nun in Zusammenhang mit Figur 2 näher dargelegt. Der Raumluftregler 31 ist einerseits mit dem Zuluftregler 32 und andererseits mit einer ersten Regelstrecke 33 für den klimatisierten Raum 1 verbunden. Der Zuluftregler 32 ist ferner mit einer zweiten Regelstrecke 34 für die Klimaanlage 16 und mit der ersten Regelstrecke 33 verbunden. Der Raumluftregler 31, der Zuluftregler 32, die erste und die zweite Regelstrecken 33 und 34 können in bekannter Weise pneumatisch, hydraulisch oder auch elektrisch betrieben werden. Mit den Sollwerten der Raumluft, mit dem Pfeil R-Soll angedeutet, und den gemessenen Werten der Temperatur und der relativen Feuchte der Raumluft, mit dem Pfeil R-Ist angedeutet, ermittelt der Raumluftregler 31 die Sollwerte Z-Soll für die Temperatur und die relative Feuchte der Zuluft. Diese Sollwerte Z-Soll werden zusammen mit den Messwerten Z-Ist der Temperatur und der relativen Feuchte der Zuluft und gegebenenfalls mit den Messwerten der Temperatur und der relativen Feuchte der Aussenluft an den Zuluftregler 32 angelegt. Aus diesen Werten Z-Soll und Z-Ist bestimmt der Zuluftregler 32 die für die Stellgrössen der Klimaanlage 16 einzustellenden Werte, welche auf die verschiedenen Einflussfaktoren, wie Kühlaggregat 17, Luftwäscher 19, Heizung 22 und Gebläse 23 einwirken. Diese definieren zusammen mit den Sensoren 27 am Zuluftkanal 5 und gegebenenfalls mit den Sensoren 29 am Aussenluftkanal 13 (vergleiche Figur 1) die Regelstrecke 34 der Klimaanlage 16. Durch diese Regelung stellt sich rasch ein stabiler Zustand der Zuluft ein, die in den klimatisierten Raum 1 eingeleitet wird und sich dort mit der vorhandenen Raumluft vermischt. Aus dieser Mischung entsteht ein neuer Zustand der Raumluft, was Temperatur und relative Feuchte anbelangt, die von den Sensoren 28 erfasst werden. Daraus bestimmt dann der Raumluftregler 31 in der oben erklärten Weise die neuen Sollwerte Z-Soll der Temperatur und der relativen Feuchte für die Zuluft. In dieser Kaskadenregelung gewährleistet der Zuluftregler 32 die Stabilität und der Raumluftregler 31 die Genauigkeit der einzustellenden Werte.

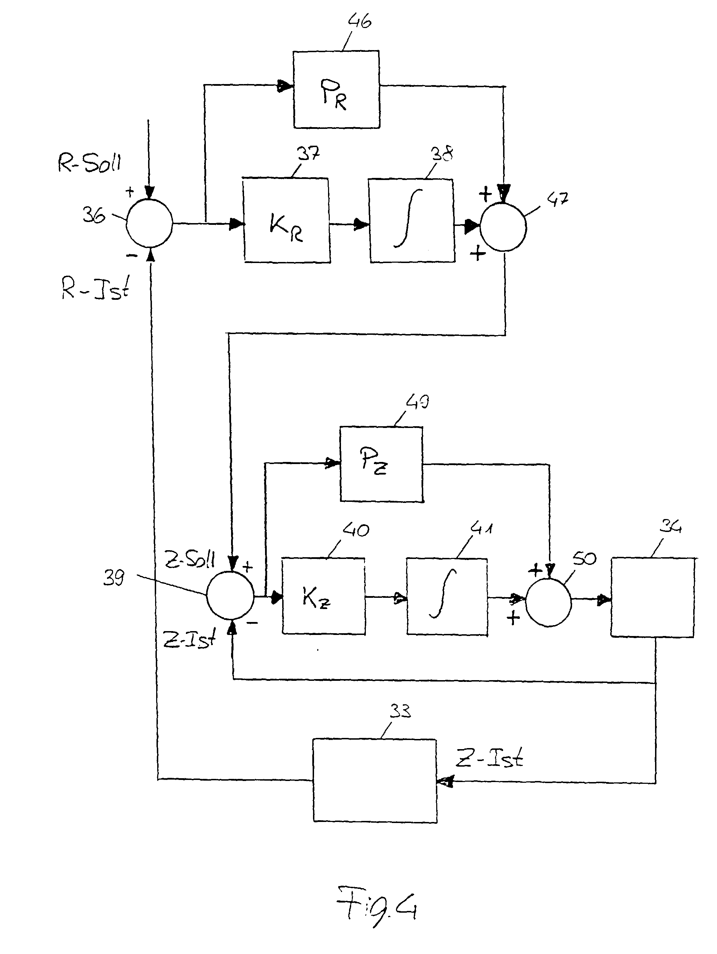

In Figur 3 ist nun eine konkrete Ausführung für die oben beschriebene Kaskadenregelung angegeben. Der physikalische Zusammenhang von relativer Feuchte und Temperatur ist regelungstechnisch wenig vorteilhaft, da sie sich gegenseitig beeinflussen. Bei gleichbleibendem absoluten Wassergehalt der Luft wird bei einer Temperaturänderung auch die relative Feuchte verändert und umgekehrt. Soll beispielsweise die relative Feuchte der Zuluft erhöht und die Temperatur gleich behalten werden, so müssen die Stellglieder der Pumpe 20 des Luftwäschers 19 und diejenigen des Ventils 18 des Kühlaggregates 17 gleichzeitig geregelt werden. Wird durch Erhöhen der Pumpendrehzahl mehr Wasser eingespritzt, so nimmt die relative Feuchte zu, und die Temperatur der befeuchteten Luft sinkt aufgrund der ihr entzogenen Verdampfungswärme. Demzufolge muss das Ventil 18 wieder mehr geschlossen werden, um diese Temperaturdifferenz auszugleichen. Aus diesem Grunde sind für die Temperatur und die relative Feuchte zwei getrennte Kaskadenregelungen vorgesehen, die beide identisch aufgebaut sind, und deshalb anhand einer einzigen Figur 3 erklärt werden können. Die Regelung wird nun in Bezug auf die Temperatur der Zuluft dargestellt, ist aber demzufolge identisch für die Regelung der relativen Feuchte ausgelegt. In einem Differenzglied 36 wird die Differenz zwischen dem Sollwert R-Soll der Raumlufttemperatur und dem Istwert R-Ist der Raumlufttemperatur gebildet, welches Signal an einen Verstärker 37 mit dem Verstärkungsfaktor K_{R} für die Raumluft weitergeleitet wird. In einem Integralglied 38 wird daraus ein Zeitintegral gebildet, und dieses Signal wird als Sollwert Z-Soll für die Zulufttemperatur einem Differenzglied 39 zugeführt. Hier wird aus dem Sollwert Z-Soll und dem Istwert Z-Ist eine Differenz gebildet, welches Signal an einen Verstärker 40 mit dem Verstärkungsfaktor K_{Z} weitergeleitet wird. Dieses ist über ein Integralglied 41 mit der oben beschriebenen Regelstrecke 34 der Klimaanlage 16 verbunden, in welcher der aktuelle Istwert Z-Ist, d.h. die aktuelle Temperatur der Zuluft, gebildet und gemessen wird. Die in den klimatisierten Raum 1 eingeführte Zuluft beeinflusst die Raumlufttemperatur, was mit einer Signalleitung 44 und der Regelstrecke 33 des klimatisierten Raumes angedeutet ist. Dort wird in der oben beschriebenen Art der neue Istwert R-Ist der Raumlufttemperatur gemessen. In genau gleicher Weise ist auch eine Kaskadenregelung für die relative Feuchte vorgesehen.

Die erste Kaskadenregelung regelt nun die relative Feuchte über die Pumpe 20 des Luftwäschers 19 (Fig. 1). Bei jeder Korrektur der relativen Feuchte erfolgt gleichzeitig eine Änderung der Temperatur, die unter Umständen nicht erwünscht ist. Die zweite Kaskadenregelung für die Temperatur regelt sodann die Temperatur über das Ventil 18 des Kühlaggregates 17. Bei jeder Regelung der Temperatur erfolgt auch eine Änderung der relativen Feuchte. Wenn nun beide Kaskadenregelungen gleichzeitig laufen, korrigiert jede Kaskadenregelung die eigene Regelgrösse mit den Störungen, die ihrer Regelgrösse durch die andere Kaskadenregelung verursacht werden. Dadurch erfolgt ein Einpendeln der zu regelnden Grössen der Zuluft, so dass die Temperatur und die relative Feuchte der Raumluft im klimatisierten Raum 1 auf einem sehr stabilen Wert konstant gehalten werden.

Bei der vorbeschriebenen Regelung pendeln die Werte der Zuluft mit einer geringen Amplitude um einen Grundwert, dies als Folge der mit den Sensoren zusammenwirkenden Integralglieder der Kaskadenregelungen. Um dies zu verbessern, kann die obige Schaltung wie in Figur 4 dargestellt mit Proportionalgliedern ergänzt werden. Zwischen dem Differenzglied 36 und dem Differenzglied 39 ist demnach parallel zum Verstärker 37 und Integralglied 38 ein Proportionalglied 46 mit dem Proportionalbeiwert P_{R} über ein Summenglied 47 zugeschaltet. Ähnlich ist ein Proportionalglied 49 mit dem Proportionalbeiwert P_{Z} und einem Summenglied 50 parallel zum Verstärker 40 und Integralglied 41 zugeschaltet. Die so ausgestattete Kaskadenregelung reagiert schneller, so dass beim Starten der Spinn- und Spulmaschinen 2 und 3 die relative Feuchte der Raumluft so schnell wie möglich den vorgegebenen Sollwert erreicht. Dadurch werden Fadenbrüche in der Startphase und auch während des Doffens weitestgehend verhindert. Die Schwingungen der Temperatur und der relativen Feuchte der Zuluft, welche bei der in Fig. 3 beschriebenen Kaskadenregelung noch vorkommen können, treten bei dieser Kaskadenregelung nicht mehr auf.

Die in den Figuren 3 und 4 beschriebenen Kaskadenregelungen eignen sich sowohl für eine Klimaanlage im reinen Umluftbetrieb, d.h. bei welchem keine Frischluft von ausserhalb des klimatisierten Raumes 1 hinzugefügt wird, als auch unter Austausch von mit Wasserdampf beladener Abluft und frisch zugeführter Aussenluft. In Figur 5 ist die Mischeinheit oder Umluftklappe 11 zur Erläuterung dieses Prinzips näher dargestellt. Wie dort ersichtlich wird die Abluft 51 über den Verbindungskanal 10 in die Mischeinheit oder Umluftklappe 11 eingeleitet. Die Mischeinheit 11 ist durch eine motorisch verstellbare Reihe von aneinander liegenden Lamellen 56 in zwei Kammern 57 und 58 aufgeteilt. Der Verbindungskanal 10 und der Ausblaskanal 12 sind somit mit der ersten Kammer 57 verbunden, und der Aussenluftkanal 13 und der Mischluftkanal 14 mit der zweiten Kammer 58. Vor dem Ausblaskanal 12 und vor dem Aussenluftkanal 13 sind innerhalb der Mischeinheit 11 ebenfalls motorisch verstellbare Lamellenreihen 59 und 60 vorgesehen. Die Klimaanlage 16 kann somit ausschliesslich mit Umluft betrieben werden (Lamellen 56 vollständig offen; Lamellen 59 und 60 vollständig geschlossen), oder die gesamte Abluft 51 wird als Ausblasluft 52 ausgestossen und durch frische Aussenluft 53 ausgetauscht (Lamellen 56 vollständig geschlossen, Lamellen 59 und 60 vollständig offen). Zwischen diesen beiden Endstellungen kann durch geeignete Einstellung des öffnungswinkels der Lamellen 56, 59 und 60 die Abluft 51 in einem vorbestimmten Verhältnis mit frischer Aussenluft 53 gemischt und als Mischluft 54 der Klimaanlage über den Mischluftkanal 14 zugeführt werden.

Die Funktionsweise der in dieser Art betriebenen und in Figur 1 in Verbindung mit Figur 5 dargestellten Klimaregelung ist nun wie folgt:
Falls die Abwärme 4 der Spinnmaschinen 2 und Spulmaschinen 3 nicht ausreicht, um die Zuluft auf die richtige Temperatur aufzuwärmen, muss die Heizung 22 eingeschaltet werden. Dies gilt beispielsweise für Spinnereien in kälteren Gebieten, wie im Norden Europas. In diesem Fall ist die Umluftklappe 11 auf Umluft geschaltet, d.h. es wird keine frische Aussenluft 53 über den Aussenluftkanal 13 zugeführt. Die Umluftklappe 11 wird jedoch in eine andere Stellung geschaltet, wenn die Temperatur der Zuluft durch die Zuführung von Aussenluft gekühlt werden soll, was für Spinnereien in wärmeren Gebieten zutreffend sein kann. In diesem Fall wird die Abluft 51 mit der frischen Aussluft 53 vermischt, so dass die Zuluft automatisch gekühlt wird. Dies unter der Voraussetzung, dass die Aussenluft 53 kühler ist als die Abluft 51. Erst wenn diese Art Kühlung nicht ausreicht, d.h. wenn sich die Lamellen 56, 59 und 60 der Umluftklappe 11 sich in ihrer Endstellung befinden, d.h. wenn ein vollständiger Austausch der Abluft 51 durch frische Aussenluft 53 erfolgt, wird das Stellglied des Ventils 18 des Kühlaggregates 17 angesteuert. Auf diese Art soll nicht nur die Temperatur der Zuluft geregelt werden, sondern auch die relative Feuchte.

Es versteht sich, dass die Vorgaben an die Klimaanlage 16 aufgrund der oben angedeuteten Anforderungen nicht immer eindeutig sind, und sich sogar gegenseitig widersprechen können. Um dennoch zu einer vernünftigen Regelung zu gelangen, bietet sich eine Steuerung mit der sogenannten "Fuzzy-Logik" an, deren Grundsätze im Lehrbuch "Fuzzy-Logik" von Prof. Dr. Gert Böhme im Springer-Verlag (1993) ausführlich dargelegt sind. Dabei werden zur Entscheidungsfindung bestimmte Fuzzy-Mengen angewandt, die weniger präzise Aussagen in eine regelstabile Steuerung der Stellgrössen umsetzen lassen.

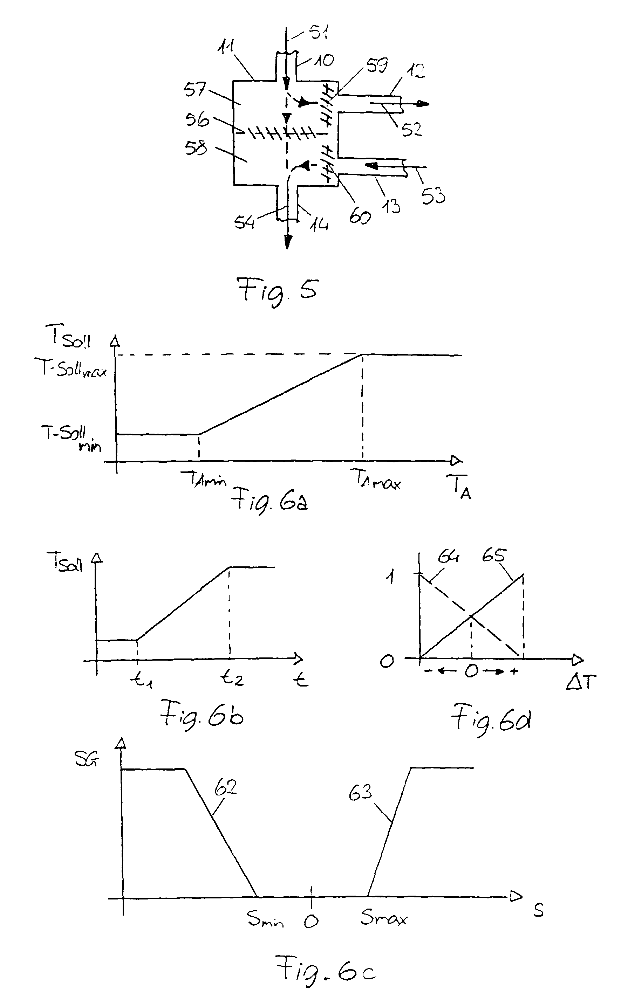

Anhand der Figur 6 wird nun die Anwendung der Fuzzy-Logik für die vorbeschriebene Regelung ansatzweise verdeutlicht. In Figur 6a ist eine Fuzzy-Menge für den Sollwert der Temperatur T-Soll in Abhängigkeit der Aussentemperatur T_{A} dargestellt. Unterhalb eines bestimmten Minimalwertes T-Sollₘᵢₙ, der bei einer Aussentemperatur T_{Amin} erreicht wird, darf der Sollwert T-Soll nicht fallen. Ebenfalls darf der Sollwert T-Soll nicht über einen bestimmten Maximalwert T-Sollₘₐₓ, der bei einer Aussentemperatur T_{Amax} erreicht wird, hinausgehen. Zwischen diesen Werten verändert sich der Sollwert T-Soll linear mit der Aussentemperatur T_{A}. Dies bedeutet, dass die Regelung des Sollwertes T-Soll in diesem Bereich der Aussentemperatur T_{A} folgt. Unterhalb des Minimalwertes T-Sollₘᵢₙ kann die Temperatur zusätzlich mittels der Heizung 22 eingehalten werden, und oberhalb des Maximalwertes T-Sollₘₐₓ mittels des Kühlaggregates 17. Damit die Anpassung des Sollwertes T-Soll nicht unmittelbar bei jeder Änderung der Aussentemperatur T_{A} erfolgt, ist eine zeitliche Begrenzung gemäss der Kurve der Figur 6b vorgesehen, die eine langsame Einstellung des Sollwertes vorsieht, bei welcher der Sollwert von einem Zeitpunkt t₁ an nach einer Zeitdauer t₂ - t₁ erreicht wird. Mit einer solchen Regelung wird eine gleitende Temperatureinstellung möglich, die eine optimale Ausnützung der Kühlung oder Erwärmung der Zuluft mittels frischer Aussenluft ergibt. Rasche Temperaturwechsel, die sich auf die Maschinen mit ihrer thermischen Trägheit nicht übertragen lassen, werden damit vermieden, was erst eine ökonomische gleitende Temperaturführung möglich macht. Die Einstellung der obengenannten Sollkurve erfolgt durch den Spinnereileiter, welcher damit seine einschlägigen Erfahrungen in die Regelung der Klimaanlage 16 gezielt einsetzen kann.

In Figur 6c ist nun die Fuzzy-Menge für die Einstellung der Stellglieder SG des Kühlaggregates 17 und der Heizung 22 in Abhängigkeit von einer Stellgrösse S, gegeben durch den Istwert der Temperatur T-Ist und den Sollwert T_{Soll}, dargestellt. Falls diese Stellgrösse S unterhalb eines bestimmten Wertes Sₘᵢₙ fällt, wird allmählich die Heizung 22 gemäss der Kurve 62 eingeschaltet. Umgekehrt wenn die Stellgrösse S oberhalb eines bestimmten Wertes Sₘₐₓ hinausgeht, wird das Kühlaggregat 17 gemäss der Kurve 63 eingeschaltet. Innerhalb des Bereiches zwischen Sₘᵢₙ und Sₘₐₓ wird die Temperatur der Zuluft nur mittels der Umluftklappe 11 geregelt. Die lineare Regelung der motorisch verstellbaren Lamellen 56 ist gemäss der gestrichelt dargestellten Kurve 64 in Figur 6d und diejenige der Lamellen 59 und 60 gemäss der in gezogenen Linien dargestellte Kurve 65 in Figur 6d angegeben. Mit diesen Fuzzy-Mengen kann die Klimaanlage 16 optimal in Abhängigkeit der Gegebenheiten betrieben werden, was mit einer herkömmlichen Klimaregelung nicht möglich ist.

Auch die Luftströmung der Zuluft und der Abluft können berücksichtigt werden, wenn der Abluftkanal 6 zusätzlich zu den Sensoren 28 mit einem Sensor zur Messung der Luftströmungsgeschwindigkeit ausgerüstet wird (vergleiche Figur 1). Damit lässt sich die Leistung des Gebläses 23 auf ein absolut notwendiges Minimum einstellen, um den erforderlichen Luftaustausch zu gewährleisten. Bekanntlich wird bei einem zu geringen Luftdurchsatz im klimatisierten Raum 1 die Raumluft durch die Abwärme der Textilmaschinen in deren unmittelbarer Nähe zu stark erwärmt, so dass lokal erhebliche Unterschiede in der Temperatur und der relativen Luftfeuchte entstehen können, die sich negativ auf den Betrieb der Textilmaschinen auswirken. Mit diesem Sensor kann die Luftströmung im klimatisierten Raum 1 über die Abluft erfasst werden, und können somit die verschiedenen Stellgrössen der Klimaanlage 16 durch die SteUerung gemäss einer weiteren (hier nicht dargestellten) Fuzzy-Menge mit dem Prozessrechner 26 optimal eingestellt werden. Des weiteren kann damit eine Rückströmung der Maschinenabluft über den Abluftkanal 6 in den klimatisierten Raum 1 verhindert werden.

Ferner ist ein maximaler Wert der Staub- und Flugbelastung der Raumluft aufgrund gesundheitlicher Vorschriften nicht zu überschreiten. Die Sensoren 28 in Figur 1 können deshalb auch mit einem Sensor zur Messung des Staubgehaltes ergänzt werden, die aufgrund der gemessenen Staubbelastung der Raumluft zur Steuerung des minimalen Luftdurchsatzes eingesetzt werden. Ein solcher handelsüblicher Sensor basiert zum Beispiel auf dem Prinzip einer Laser-Lichtschranke, und kann zusätzlich die Filterleistung der Filtereinheit 16 über den Prozessrechner 26 steuern und überwachen lassen. Die Signalleitungen mit dem Prozessrechner 26 sind in diesem Fall identisch ausgelegt wie für die Sensoren 28 für die Temperatur und für die relative Feuchte. Die Steuerung ist dann so ausgelegt, dass die Drehzahl des Ventilators des Gebläses 9 zwischen der Filtereinheit 8 und der Umluftklappe 11 aufgrund des im Abluftkanal 6 gemessenen Wertes des Staubgehaltes durch den Prozessrechner gesteuert wird.

Als weitere Ergänzung kann im klimatisierten Raum 1 ein Differenzdrucksensor 70 vorgesehen sein (vergleiche Figur 1), der die Differenz zwischen dem Druck im klimatisierten Raum 1 und dem Aussendruck erfasst. Als Differenzdrucksensor 70 wird vorzugsweise ein Luftströmungssensor eingesetzt. Die Signalleitungen sind wieder identisch ausgelegt und mit dem Prozessrechner 26 verbunden wie bei den Sensoren 28. Die Drehzahl des Ventilators im Gebläse 23 wird dann mit einem sogenannten "Master-Slave"-Regelkreis im Verhältnis zur Drehzahl des Gebläses 9 geändert, und zwar so, dass der Druck im klimatisierten Raum 1 gleich dem Aussendruck gehalten wird. Damit wird vermieden, dass beim Öffnen von Türen nach aussen eine Luft-Ausgleichsströmung entsteht, welche die gesamte Funktion der Klimaanlage 16 stört. Die Steuerung der Gebläseleistung kann anstatt der obigen Drehzahlregelung auch über eine Drosselklappe erfolgen, welche bei konstanter Drehzahl verstellt wird.

In einer weiteren Ausgestaltung können auch Sensoren 72 zur Messung der von allen im klimatisierten Raum 1 befindlichen Textilmaschinen 2 und 3 verbrauchten elektrischen Energie oder Wirkleistung vorgesehen sein (vergleiche Figur 1), die ähnlich wie beim Differenzdrucksensor 70 ebenfalls über Signalleitungen mit dem Prozessrechner 26 verbunden sind und deren Messsignale auf die Steuerung der Klimaanlage 16 in der oben beschriebenen Art Einfluss nehmen. Dies kann gegebenenfalls auch schon mit einem einzigen gemeinsamen Sensor 72 bei der elektrischen Einspeisung für alle Textilmaschinen 2 und 3 geschehen. Diese handelsüblichen Sensoren 72 zur Messung der elektrischen Wirkleistung funktionieren auf der Basis einer wattmetrischen Messung. Auch der Staubgehalt und/oder der Differenzdruck und/oder die verbrauchte elektrische Energie können gemäss einer jeweiligen vorbestimmten Fuzzy-Menge im Prozessrechner 26 zur Steuerung der Klimaanlage 16 berücksichtigt werden.

Die oben beschriebene Vorrichtung zur Klimaregelung in den verschiedenen Ausführungen eignet sich ausgezeichnet für die Anwendung in bestehenden Klimaanlagen, d.h. es brauchen im wesentlichen nur die Sensoren 27 und 28 (und gegebenenfalls die Sensoren 29, 70 und 72) am richtigen Ort installiert und die normale Prozesssteuerung durch den neuen Prozessrechner 26 mit den Kaskadenregelungen ausgetauscht zu werden. Diese Vorrichtung spart dadurch eine erhebliche Ventilationsleistung des Gebläses 23 ein, was sich unmittelbar auf die Produktionskosten einer Spinnerei niederschlägt. Des weiteren bringt ein Raumklima mit verringerter Luftströmung und optimaler Einstellung der Temperatur und der relativen Feuchte eine bessere Leistung der Textilmaschinen mit bedeutend weniger Fadenbrüchen, vor allem auch in den Start- und Doffphasen. Das verbesserte Betriebsklima wirkt sich ebenfalls auf das Bedienpersonal aus, was zur weiteren Qualitätssteigerung der Garnerzeugnisse beitragen kann.

## Patentansprüche

1. Vorrichtung zur Klimaregelung eines zum klimatisierten Betrieb von Textilmaschinen mit einem Abluftkanal (6), einem Zuluftkanal (5) sowie einer Klimaanlage (16) ausgestatteten Raumes (1), umfassend eine Regelvorrichtung (26) mit einem ersten Satz von Sensoren (28) zur Messung des Ist-Wertes der Temperatur und der relativen Feuchte der Raumluft (R-Ist), dadurch gekennzeichnet, dass der erste Satz von Sensoren (28) mit einem ersten Regelkreis (31) in Steuerverbindung stehen, dass ein zweiter Satz von Sensoren (27) zur Messung des Ist-Wertes der Temperatur und der relativen Feuchte der Zuluft (Z-Ist) im Zuluftkanal (5) bestimmt ist, dass der zweite Satz von Sensoren (27) mit einem zweiten Regelkreis (32) in Steuerverbindung stehen, dass der erste Regelkreis (31) und der zweite Regelkreis (32) als Kaskadenregelung verbunden sind, wobei der erste Regelkreis (31) aus dem Ist-Wert der Raumluft (R-Ist) sowie einem vorgebbaren Sollwert der Raumluft (R-Soll) einen Sollwert für die Zuluft (Z-Soll) als Stellgrösse an den zweiten Regelkreis (32) liefert, und dass der zweite Regelkreis (32) die Stellglieder (17,18,19,20,22) der Klimaanlage (16) steuert.

2. Vorrichtung nach Anspruch 1, dadurch gekennzeichnet, dass der zweite Regelkreis (32) zumindest zwei der Klimaanlage (16) zuführbare Steuersignale generiert, ein Steuersignal für ein Stellglied (19,20) zum Befeuchten der Luft und ein Steuersignal für ein Stellglied (17,18,22) zum Beeinflussen der Temperatur der Luft.

3. Vorrichtung nach Anspruch 1, dadurch gekennzeichnet, dass die mit dem ersten Regelkreis (31) und dem zweiten Regelkreis (32) gebildete Kaskadenregelung eine erste und eine zweite Kaskadenregelung umfasst, und dass die Sensoren (27, 28) zur Messung der Temperatur mit der ersten Kaskadenregelung verbunden sind, und die Sensoren (27, 28) zur Messung der relativen Feuchte mit der zweiten Kaskadenregelung verbunden sind, und dass die erste und die zweite Kaskadenregelung unabhängig voneinander sind.

4. Vorrichtung nach einem der Ansprüche 1 bis 3, dadurch gekennzeichnet, dass im Abluftkanal (6) eine Mischeinheit (11), insbesondere eine motorisch verstellbare Umluftklappe, vorgesehen ist, die mit einem Aussenluftkanal (13) in Verbindung steht, an welchem Sensoren (29) zur Messung der Temperatur und der relativen Feuchte angeordnet sind und diese zusammen mit der Mischeinheit (11) mit dem zweiten Regelkreis (32) in Steuerverbindung stehen.

5. Vorrichtung nach einem der Ansprüche 1 bis 4, dadurch gekennzeichnet, dass die Regelkreise (31, 32) als Integral-Regler ausgebildet sind.

6. Vorrichtung nach einem der Ansprüche 1 bis 4, dadurch gekennzeichnet, dass die Regelkreise (31, 32) als Proportional-Integral-Regler ausgebildet sind.

7. Vorrichtung nach einem der Ansprüche 1 bis 6, dadurch gekennzeichnet, dass die Sensoren (27) zur Messung der Temperatur und der relativen Feuchte der Raumluft im Abluftkanal (6) des klimatisierten Raumes (1) vorgesehen sind.

8. Vorrichtung nach einem der Ansprüche 1 bis 7, dadurch gekennzeichnet, dass die Sensoren (27, 28, 29) zur Messung der Temperatur Sensoren mit einem Halbleiter-Widerstand oder mit einem Widerstandsdraht sind.

9. Vorrichtung nach einem der Ansprüche 1 bis 8, dadurch gekennzeichnet, dass die Sensoren (27, 28, 29) zur Messung der relativen Feuchte nach dem kapazitiven oder resistivem Messprinzip ausgebildet sind.

10. Vorrichtung nach einem der Ansprüche 1 bis 9, dadurch gekennzeichnet, dass ein Sensor zur Messung der Luftströmungsgeschwindigkeit im Abluftkanal (6) des klimatisierten Raumes (1) vorgesehen ist, welcher mit einer Drehzahlsteuerung eines Gebläses (23) zur Regelung des Luftdurchsatzes verbunden ist.

11. Vorrichtung nach Anspruch 10, dadurch gekennzeichnet, dass ein Sensor zur Messung des Staubgehaltes im Abluftkanal (6) des klimatisierten Raumes (1) vorgesehen ist, dessen Messwerte dazu bestimmt sind, einen Minimalwert für den Luftdurchsatz vorzugeben.

12. Vorrichtung nach einem der Ansprüche 1 bis 11, dadurch gekennzeichnet, dass im klimatisierten Raum (1) ein Differenzdrucksensor (70) vorgesehen ist, welcher mit einer Steuerung von mindestens zwei Gebläsen (9; 23) zur Regelung des Druckausgleiches verbunden ist.

13. Vorrichtung nach einem der Ansprüche 1 bis 12, dadurch gekennzeichnet, dass bei der elektrischen Einspeisung an den Textilmaschinen (2, 3) im klimatisierten Raum (1) mindestens ein Sensor (72) zur Erfassung der verbrauchten elektrischen Energie vorgesehen ist, der mit dem Prozessrechner (26) verbunden ist.

14. Vorrichtung nach einem der Ansprüche 1 bis 13, dadurch gekennzeichnet, dass die Regelkreise (31, 32) nach vorbestimmten Fuzzy-Mengen für die Temperatur, für die relative Feuchte und gegebenenfalls für den Luftdurchsatz und /oder den Differenzdruck und/oder die verbrauchte elektrische Energie operieren.

15. Vorrichtung nach einem der Ansprüche 2 bis 14, dadurch gekennzeichnet, dass die Regelvorrichtung (26) einen Prozessrechner (26) umfasst, und der erste Regelkreis (31) sowie der zweite Regelkreis (32) durch den Prozessrechner (26) ausgebildet ist.

16. Vorrichtung nach Anspruch 15, dadurch gekennzeichnet, dass der Prozessrechner (26) mindestens einen nach vorbestimmten Fuzzy-Mengen für die Temperatur und für die relative Feuchte operierenden Regelkreis (31, 32) aufweist.

17. Vorrichtung nach einem der Ansprüche 15 oder 16, dadurch gekennzeichnet, dass ein Sensor zur Messung des Staubgehaltes im Abluftkanal (6) vorgesehen ist, der mit dem Prozessrechner (26) in Steuerverbindung steht, der mindestens einen nach einer vorbestimmten Fuzzy-Menge für den Luftdurchsatz operierenden Regelkreis (31, 32) aufweist.

18. Vorrichtung nach einem der Ansprüche 15 bis 17, dadurch gekennzeichnet, dass ein Sensor (70) zur Erfassung des Differenzdruckes im klimatisierten Raum (1) vorgesehen ist, der mit dem Prozessrechner (26) in Steuerverbindung steht, der mindestens einen nach einer vorbestimmten Fuzzy-Menge für den Differenzdruck operierenden Regelkreis (31, 32) aufweist.

19. Vorrichtung nach einem der Ansprüche 15 bis 18, dadurch gekennzeichnet, dass mindestens ein Sensor (72) zur Messung der von den Textilmaschinen (2, 3) verbrauchten elektrischen Energie vorgesehen ist, der mit dem Prozessrechner (26) in Steuerverbindung steht, der mindestens einen nach einer vorbestimmten Fuzzy-Menge für die verbrauchte elektrische Energie operierenden Regelkreis (31, 32) aufweist.

20. Verfahren zur Klimaregelung eines zum klimatisierten Betrieb von Textilmaschinen mit einem Abluftkanal (6), einem Zuluftkanal (5) sowie einer Klimaanlage (16) ausgestatteten Raumes (1), bei welchem die Abluft in eine Klimaanlage (16) geleitet, dort wieder aufbereitet, und als Zuluft dem klimatisierten Raum (1) zugeführt wird, dadurch gekennzeichnet, dass die Temperatur und die relative Feuchte der Raumluft (R-Ist) gemessen und diese Werte einem ersten Regelkreis (31) zugeführt werden, in welchem aufgrund vorgegebener Sollwerte (R-Soll) ein Sollwert (Z-Soll) für die Temperatur und für die relative Feuchte der Zuluft bestimmt wird, dass im Zuluftkanal (5) die Temperatur und die relative Feuchte der Zuluft (Z-Ist) gemessen wird, und dass der Sollwerte (Z-Soll) zusammen mit den gemessenen Werten (Z-Ist) der Zuluft einem zweiten Regelkreis (32) zugeführt werden, welcher ein Steuersignal für die Temperatur und ein Steuersignal für die Luftfeuchtigkeit erzeugt, und dass die Stellglieder (17,18,19,20,22,23) der Klimaanlage (16) mit dem Steuersignal für die Temperatur und dem Steuersignal für die Luftfeuchtigkeit derart angesteuert werden, dass sowohl die relative Feuchte als auch die Temperatur der Raumluft (R-Ist) in einem engen Bandbreitenbereich reguliert werden.

21. Verfahren nach Anspruch 20, dadurch gekennzeichnet, dass die Stellglieder der Klimaanlage (16) einerseits bezüglich der Temperatur und andererseits bezüglich der relativen Feuchte über getrennte Regelungen eingestellt werden.

22. Verfahren nach Anspruch 20 oder 21, dadurch gekennzeichnet, dass die Luftströmungsgeschwindigkeit der Abluft des klimatisierten Raumes (1) gemessen wird, und aufgrund dieser Messwerte der Luftdurchsatz in der Klimaanlage (16) geregelt wird.

23. Verfahren nach einem der Ansprüche 20 bis 22, dadurch gekennzeichnet, dass der Staubgehalt der Abluft des klimatisierten Raumes (1) gemessen wird, und aufgrund dieser Messwerte ein Minimalwert für die Regelung des Luftdurchsatzes festgelegt wird.

24. Verfahren nach einem der Ansprüche 20 bis 23, dadurch gekennzeichnet, dass der Differenzdruck zwischen dem Druck im klimatisierten Raum (1) und dem Aussendruck gemessen wird, und die Luftströmung in der Klimaanlage (16) mittels Gebläsen (9; 23) derart geregelt wird, dass der Druck im klimatisierten Raum (1) gleich dem Aussendruck gehalten wird.

25. Verfahren nach einem der Ansprüche 20 bis 24, dadurch gekennzeichnet, dass die von den Textilmaschinen (2, 3) im klimatisierten Raum (1) verbrauchte elektrische Energie gemessen wird, und aufgrund dieser Messwerte die Temperatur, die relative Feuchte und der Luftdurchsatz im klimatisierten Raum (1) geregelt werden.

26. Verfahren nach einem der Ansprüche 20 bis 25, dadurch gekennzeichnet, dass die Temperatur, die relative Feuchte und gegebenenfalls der Luftdurchsatz mit einem Prozessrechner (26) und insbesondere aufgrund von vorbestimmten Fuzzy-Mengen geregelt werden.

27. Verfahren nach einem der Ansprüche 20 bis 26, dadurch gekennzeichnet, dass die Temperatur und die relative Feuchte der Raumluft gemessen werden, diese Werte einem Prozessrechner (26) zugeführt werden, und die Klimaanlage (16) aufgrund von vorbestimmten Fuzzy-Mengen für die Temperatur und die relative Feuchte geregelt wird.

28. Verfahren nach Anspruch 27, dadurch gekennzeichnet, dass zusätzlich die Luftströmungsgeschwindigkeit der Abluft des klimatisierten Raumes (1) gemessen wird, und aufgrund dieser Messwerte der Luftdurchsatz in der Klimaanlage (16) nach einer vorbestimmten Fuzzy-Menge geregelt wird.

29. Verfahren nach Anspruch 27 oder 28, dadurch gekennzeichnet, dass der Differenzdruck zwischen dem Druck im klimatisierten Raum (1) und dem Aussendruck gemessen wird, und die Luftströmung in der Klimaanlage (16) mittels Gebläsen (9; 23) nach einer vorbestimmten Fuzzy-Menge derart geregelt wird, dass der Druck im klimatisierten Raum (1) gleich dem Aussendruck gehalten wird.

30. Verfahren nach einem der Ansprüche 27 bis 29, dadurch gekennzeichnet, dass der Staubgehalt der Abluft des klimatisierten Raumes (1) gemessen wird, und aufgrund dieser Messwerte ein Minimalwert für den Luftdurchsatz festgelegt wird, und aufgrund dieses Minimalwertes der Luftdurchsatz nach einer vorbestimmten Fuzzy-Menge geregelt wird.

31. Verfahren nach einem der Ansprüche 27 bis 30, dadurch gekennzeichnet, dass die von den Textilmaschinen (2, 3) im klimatisierten Raum (1) verbrauchte elektrische Energie gemessen wird, und aufgrund dieser Messwerte die Temperatur, die relative Feuchte und der Luftdurchsatz im klimatisierten Raum (1) nach einer vorbestimmten Fuzzy-Menge geregelt werden.

## Claims

1. An apparatus for controlling the air conditioning in a room (1) equipped with a waste air duct(6), a feed air duct (5) and an air conditioning plant (16) for the air-conditioned operation of textile machinery, said apparatus comprising a regulating device (26) with a first set of sensors (28) for measuring the actual value of the temperature and of the relative humidity of the room air (R-Ist), characterised in that the first set of sensors (28) is in controlling communication with a first control circuit (31), a second set of sensors (27) is intended to measure the actual value of the temperature and of the relative humidity of the feed air (Z-Ist) in the feed air duct (5), the second set of sensors (27) is in controlling communication with a second control circuit (32), the first control circuit (31) and the second control circuit (32) are connected as a cascade control system, whereby the first control circuit (31), on a basis ofthe actual value ofthe room air (R-Ist) and a predeterminable desired value ofthe room air (R-Soll) delivers a desired value for the feed air (Z-Soll) to the second control circuit (32) as a control variable and in that the second control circuit (32) controls the positioning members (17, 18, 19, 20, 22) ofthe air conditioning plant (16).

2. An apparatus according to claim 1, characterised in that the second control circuit (32) generates at least two control signals which can be fed to the air conditioning plant (16), a control signal for a positioning member (19, 20) for humidifying the air and a control signal for a positioning member (17, 18, 22) for influencing the temperature of the air.

3. An apparatus according to claim 1, characterised in that the cascade control system formed by the first control circuit (31) and the second control circuit (32) comprises a first and a second cascade control system and in that the sensors (27, 28) for measuring the temperature are connected to the first cascade control system while the sensors (27, 28) for measuring the relative humidity are connected to the second cascade control system and in that the first and the second control systems are independent of each other.

4. An apparatus according to one of claims 1 to 3, characterised in that there is in the waste air duct (6) a mixing unit (11), particularly a motorised recirculating air valve, which communicates with an outside air duct (13) on which sensors (29) are disposed for measuring the temperature and relative humidity, these, together with the mixing unit (11), being in controlling communication with the second control circuit (32).

5. An apparatus according to one of claims 1 to 4, characterised in that the control circuits (31, 32) are constructed as integral controllers.

6. An apparatus according to one of claims 1 to 4, characterised in that the control circuits (31, 32) are constructed as proportional/integral controllers.

7. An apparatus according to one of claims 1 to 6, characterised in that the sensors (27) for measuring the temperature and the relative humidity of the room air are provided in the waste air duct (6) of the air-conditioned room (1).

8. An apparatus according to one of claims 1 to 7, characterised in that the sensors (27, 28, 29) for measuring the temperature are sensors with a semi-conductor resistor or with a resistance wire.

9. An apparatus according to one of claims 1 to 8, characterised in that the sensors (27, 28, 29) for measuring the relative humidity are constructed according to the capacitative or resistive measurement principle.

10. An apparatus according to one of claims 1 to 9, characterised in that a sensor is provided for measuring the air flow velocity in the waste air duct (6) of the air-conditioned room (1) and is connected to a rotary speed control for a blower (23) for regulating the air throughput rate.

11. An apparatus according to claim 10, characterised in that a sensor is provided for measuring the dust content in the waste air duct (6) of the air-conditioned room (1) and the measured values from which are intended to preset a minimum value for the air throughput rate.

12. An apparatus according to one of claims 1 to 11, characterised in that there is in the air-conditioned room (1) a differential pressure sensor (70) which is connected to a control of at least two blowers (9; 23) for regulating the pressure compensation.

13. An apparatus according to one of claims 1 to 12, characterised in that with regard to the supply of electricity to the textile machinery (2, 3) in the air-conditioned room (1), there is at least one sensor (72) for ascertaining the amount of electrical energy consumed and which is connected to the processing computer (26).

14. An apparatus according to one of claims 1 to 13, characterised in that the control circuits (31, 32) operate according to predetermined fuzzy quantities for temperature, for relative humidity and possibly for the air throughput rate and/or the differential pressure and/or the electrical energy consumed.

15. An apparatus according to one of claims 2 to 14, characterised in that the regulating device (26) comprises a processing computer (26) and the first control circuit (31) as well as the second control circuit (32) is constructed by the processing computer (26).

16. An apparatus according to claim 15, characterised in that the processing computer (26) comprises at least one control circuit (31, 32) operating according to predetermined fuzzy quantities for temperature and relative humidity.

17. An apparatus according to one of claims 15 or 16, characterised in that a sensor is provided for measuring the dust content in the waste air duct (6) and is in controlling communication with the processing computer (26) which comprises at least one control circuit (31, 32) operating according to a predetermined fuzzy quantity for air throughput rate.

18. An apparatus according to one of claims 15 to 17, characterised in that a sensor (70) is provided for ascertaining the differential pressure in the air-conditioned room (1) and is in controlling communication with the processing computer (26) which comprises at least one control circuit (31, 32) operating according to a predetermined fuzzy quantity for the differential pressure.

19. An apparatus according to one of claims 15 to 18, characterised in that at least one sensor (72) is provided for measuring the electrical energy consumed by the textile machines (2, 3) and which is in controlling communication with the processing computer (26) which comprises at least one control circuit (31, 32) operating according to a predetermined fuzzy quantity for electrical energy consumed.

20. A method of controlling the air conditioning of a room (1) equipped with a waste air duct (6), a feed air duct (5) and an air conditioning plant (16) and in which the waste air is conducted into an air conditioning plant (16), is reprocessed there and is fed to the air-conditioned room (1) as feed air, characterised in that the temperature and the relative humidity of the room air (R-Ist) is measured and these values are fed to a first control circuit (31) in which, on the basis of predetermined desired values (R-Soll), a desired value (Z-Soll) for temperature and for relative humidity of the feed air is determined and in that in the feed air duct (5), the temperature and relative humidity of the feed air (Z-Ist) is measured and in that the desired values (Z-Soll) are, together with the measured values (Z-Ist) of the feed air, fed to a second control circuit (32) which generates a control signal for the temperature and a control signal for the atmospheric humidity and in that the positioning members (17, 18, 19, 20, 22, 23) of the air conditioning plant (16) are so actuated by the control signal for the temperature and the control signal for the atmospheric humidity that both the relative humidity and also the temperature of the room air (R-Ist) are regulated within a narrow band width.

21. A method according to claim 20, characterised in that the positioning members of the air conditioning plant (16) are adjusted via separate control systems, on the one hand in respect of temperature and on the other in respect of relative humidity.

22. A method according to claim 20 or 21, characterised in that the air flow velocity of the waste air from the air-conditioned room (1) is measured and the air throughput rate in the air conditioning plant (16) is regulated on the basis of these measured values.

23. A method according to one of claims 20 to 22, characterised in that the dust content ofthe waste air from the air-conditioned room (1) is measured and in that on a basis of these measured values, a minimum value is established for controlling the rate of air throughput.

24. A method according to one of claims 20 to 23, characterised in that the differential pressure between the pressure in the air-conditioned room (1) and the outside pressure is measured and the air flow in the air conditioning plant (16) is so regulated by means of blowers (9; 23) that the pressure in the air-conditioned room (1) is maintained equal to the outside pressure.

25. A method according to one of claims 20 to 24, characterised in that the electrical energy consumed by the textile machinery (2, 3) in the air-conditioned room (1) is measured and in that, on the basis of these measured values, the temperature, the relative humidity and the air throughput rate in the air-conditioned room (1) are regulated.

26. A method according to one of claims 20 to 25, characterised in that the temperature, the relative humidity and possibly the air throughput rate are regulated by a processing computer (26) and in particular on the basis of predetermined fuzzy properties.

27. A method according to one of claims 20 to 26, characterised in that the temperature and the relative humidity of the room air are measured, these values are fed to a processing computer (26) and the air conditioning plant (16) is controlled on the basis of predetermined fuzzy quantities for the temperature and the relative humidity.

28. A method according to claim 27, characterised in that in addition the air flow velocity of the waste air from the air-conditioned room (1) is measured and, on a basis of these measured values, the air throughput rate in the air conditioning plant (16) is regulated according to a predetermined fuzzy quantity.

29. A method according to claim 27 or 28, characterised in that the pressure difference between the pressure in the air-conditioned room (1) and the outside pressure is measured and the air flow in the air conditioning plant (16) is so regulated by means of blowers (9; 23) according to a predetermined fuzzy quantity, so that the pressure in the air-conditioned room (1) is maintained equal to the outside pressure.

30. A method according to one of claims 27 to 29, characterised in that the dust content ofthe waste air from the air-conditioned room (1) is measured and in that, on the basis of these measured values, a minimum value is established for the air throughput rate and on a basis of this minimum value the air throughput rate is controlled according to a predetermined fuzzy quantity.

31. A method according to one of claims 27 to 30, characterised in that the electrical energy consumed by the textile machines (2, 3) in the air-conditioned room (1) is measured and, on a basis of these measured values, the temperature, the relative humidity and the air throughput rate in the air-conditioned room (1) are regulated according to a predetermined fuzzy quantity.

## Revendications

1. Dispositif de régulation du conditionnement d'air d'un local (1) destiné au fonctionnement climatisé de machines textiles et équipé à cet effet d'un canal de sortie d'air (6), d'un canal d'entrée d'air (5) ainsi que d'une installation de climatisation (16), le dispositif comprenant un dispositif de régulation (26) comportant un premier jeu de capteurs (28) pour la mesure de la valeur réelle de la température et de l'humidité relative de l'air du local (R-réelle) **caractérisé** en ce que les capteurs du premier jeu de capteurs (28) sont en liaison sur le plan de la commande, avec une première boucle de régulation (31), en ce qu'un second jeu de capteurs (27) est destiné à mesurer la valeur réelle de la température et de l'humidité relative de l'air entrant (Z-réelle) dans le canal d'entrée d'air (5), en ce que les capteurs du second jeu de capteurs (27) sont en liaison sur le plan de la commande avec une seconde boucle de régulation (32), en ce que la première boucle de régulation (31) et la seconde boucle de régulation (32) sont reliées en formant une régulation en cascade, la première boucle de régulation (31) fournissant à la seconde boucle de régulation (32), à partir de la valeur réelle de l'air du local (R-réelle) ainsi que d'une valeur de consigne de l'air du local (R-consigne) pouvant être prescrite, une valeur de consigne pour l'air entrant (Z-consigne) en tant que grandeur de réglage, et en ce que la seconde boucle de régulation (32) commande les organes de réglage (17, 18, 19, 20, 22) de l'installation de climatisation (16).

2. Dispositif selon la revendication 1, **caractérisé** en ce que la seconde boucle de régulation (32) génère au moins deux signaux de commande pouvant être transmis à l'installation de climatisation (16), à savoir un signal de commande pour un organe de réglage (19, 20) destiné à humidifier l'air, et un signal de commande pour un organe de commande (17, 18, 22) destiné à influencer la température de l'air.

3. Dispositif selon la revendication 1, **caractérisé** en ce que la régulation en cascade formée par la première boucle de régulation (31) et la seconde boucle de régulation (32) comprend une première et une seconde régulation en cascade, et en ce que les capteurs (27, 28) pour la mesure de la température sont reliés à la première régulation en cascade, et les capteurs (27, 28) pour la mesure de l'humidité relative sont reliés à la seconde régulation en cascade, et en ce que la première et la seconde régulation en cascade sont indépendantes l'une de l'autre.

4. Dispositif selon l'une des revendications 1 à 3, **caractérisé** en ce que dans le canal de sortie de l'air (6) est prévue une unité de mélange (11), notamment un volet d'air de circulation pouvant être réglé par moteur, qui est en liaison avec un canal d'air extérieur (13) sur lequel sont disposés des capteurs (29) pour mesurer la température et l'humidité relative, ceux-ci étant en liaison sur le plan de la commande, en commun avec l'unité de mélange (11), avec la seconde boucle de régulation (32).

5. Dispositif selon l'une des revendications 1 à 4, **caractérisé** en ce que les boucles de régulation (31, 32) sont réalisées sous forme de régulateurs intégraux.

6. Dispositif selon l'une des revendications 1 à 4, **caractérisé** en ce que les boucles de régulation (31, 32) sont réalisées sous forme de régulateurs intégraux proportionnels.

7. Dispositif selon l'une des revendications 1 à 6, **caractérisé** en ce que les capteurs (28) pour la mesure de la température et de l'humidité relative de l'air du local sont prévus dans le canal de sortie d'air (6) du local climatisé (1).

8. Dispositif selon l'une des revendications 1 à 7, **caractérisé** en ce que les capteurs (27, 28, 29) pour la mesure de la température, sont des capteurs comprenant une résistance à semi-conducteur ou un fil de résistance.

9. Dispositif selon l'une des revendications 1 à 8, **caractérisé** en ce que les capteurs (27, 28, 29) pour la mesure de l'humidité relative, sont conçus selon le principe de mesure capacitif ou résistif.

10. Dispositif selon l'une des revendications 1 à 9, **caractérisé** en ce qu'il est prévu dans le canal de sortie d'air (6) du local climatisé (1) un capteur pour la mesure de la vitesse de l'écoulement d'air, qui est relié à une commande de la vitesse de rotation d'un ventilateur (23) pour réguler le débit d'air.

11. Dispositif selon la revendication 10, **caractérisé** en ce qu'il est prévu dans le canal de sortie d'air (6) du local climatisé (1) un capteur pour la mesure de la teneur en poussières, dont les valeurs de mesure sont destinées à prescrire une valeur minimale pour le débit d'air.

12. Dispositif selon l'une des revendications 1 à 11, **caractérisé** en ce que dans le local climatisé (1) est prévu un capteur de pression différentielle (70), qui est relié à une commande d'au moins deux ventilateurs (9 ; 23) pour la régulation de la compensation de pression.

13. Dispositif selon l'une des revendications 1 à 12, **caractérisé** en ce que sur l'alimentation électrique des machines textiles (2, 3) dans le local climatisé (1), est prévu au moins un capteur (72) destiné à relever l'énergie électrique consommée et relié au calculateur de processus industriel (26).

14. Dispositif selon l'une des revendications 1 à 13, **caractérisé** en ce que les boucles de régulation (31, 32) opèrent selon des valeurs dites "floues" prédéterminées pour la température, pour l'humidité relative et, le cas échéant, pour le débit d'air et/ou la pression différentielle et/ou l'énergie électrique consommée.

15. Dispositif selon l'une des revendications 2 à 14, **caractérisé** en ce que le dispositif de régulation (26) comprend un calculateur de processus industriel (26), et la première boucle de régulation (31) ainsi que la seconde boucle de régulation (32) sont réalisées par le calculateur de processus industriel (26).

16. Dispositif selon la revendication 15, **caractérisé** en ce que le calculateur de processus industriel (26) présente au moins une boucle de régulation (31, 32) opérant selon des valeurs floues prédéterminées pour la température et pour l'humidité relative.

17. Dispositif selon l'une des revendications 15 ou 16, **caractérisé** en ce qu'il est prévu dans le canal de sortie d'air (6), un capteur pour la mesure de la teneur en poussières, qui est en liaison sur le plan de la commande avec le calculateur de processus industriel (26) présentant au moins une boucle de régulation (31, 32) opérant selon une valeur floue prédéterminée pour le débit d'air.

18. Dispositif selon l'une des revendications 15 à 17, **caractérisé** en ce qu'il est prévu dans le local climatisé (1) un capteur (70) pour relever la pression différentielle, qui est en liaison sur le plan de la commande avec le calculateur de processus industriel (26) présentant au moins une boucle de régulation (31, 32) opérant selon une valeur floue prédéterminée pour la pression différentielle.

19. Dispositif selon l'une des revendications 15 à 18, **caractérisé** en ce qu'il est prévu au moins un capteur (72) pour la mesure de l'énergie électrique consommée par les machines textiles (2, 3), qui est en liaison sur le plan de la commande avec le calculateur de processus industriel (26) présentant au moins une boucle de régulation (31, 32) opérant selon une valeur floue prédéterminée pour l'énergie électrique consommée.

20. Procédé de régulation du conditionnement d'air d'un local (1) destiné au fonctionnement climatisé de machines textiles et équipé à cet effet d'un canal de sortie d'air (6), d'un canal d'entrée d'air (5) ainsi que d'une installation de climatisation (16), procédé selon lequel l'air sortant est envoyé dans une installation de climatisation (16), y est à nouveau retraité, et est envoyé dans le local climatisé (1) en tant qu'air entrant, **caractérisé** en ce que l'on mesure la température et l'humidité relative de l'air du local (R-réelle), ces valeurs étant transmises à une première boucle de régulation (31) dans laquelle est déterminée, sur la base de valeurs de consigne (R-consigne) prescrites, une valeur de consigne (Z-consigne) pour la température et l'humidité relative de l'air entrant, en ce que l'on mesure dans le canal d'entrée d'air (5), la température et l'humidité relative de l'air entrant (Z-réelle), et en ce que l'on transmet la valeur de consigne (Z-consigne), en commun avec les valeurs mesurées (Z-réelle) de l'air entrant, à une seconde boucle de régulation (32) qui élabore un signal de commande pour la température et un signal de commande pour l'humidité de l'air, et en ce que les organes de réglage (17, 18, 19, 20, 22, 23) de l'installation de climatisation (16) sont commandés par le signal de commande pour la température et le signal de commande pour l'humidité de l'air de façon telle, qu'aussi bien l'humidité relative que la température de l'air du local (R-réelle) soient régulées dans une plage de largeur de bande étroite.

21. Procédé selon la revendication 20, **caractérisé** en ce que les organes de réglage de l'installation de climatisation (16) sont réglés d'une part relativement à la température et d'autre part relativement à l'humidité relative, par l'intermédiaire de régulations séparées.

22. Procédé selon la revendication 20, ou 21 **caractérisé** en ce que l'on mesure la vitesse d'écoulement d'air de l'air sortant du local climatisé (1), et l'on régule le débit d'air dans l'installation de climatisation (16) sur la base de ces valeurs mesurées.

23. Procédé selon l'une des revendications 20 à 22, **caractérisé** en ce que l'on mesure la teneur en poussières de l'air sortant du local climatisé (1), et l'on détermine sur la base de ces valeurs mesurées, une valeur minimale pour la régulation du débit d'air.

24. Procédé selon l'une des revendications 20 à 23, **caractérisé** en ce que l'on mesure la pression différentielle entre la pression dans le local climatisé (1) et la pression extérieure, et l'on régule l'écoulement d'air dans l'installation de climatisation (16) au moyen de ventilateurs (9 ; 23) de façon telle, que la pression dans le local climatisé (1) soit maintenue égale à la pression extérieure.

25. Procédé selon l'une des revendications 20 à 24, **caractérisé** en ce que l'on mesure l'énergie électrique consommée par les machines textiles (2, 3) dans le local climatisé (1), et l'on régule sur la base de ces valeurs mesurées, la température, l'humidité relative et le débit d'air dans le local climatisé (1).

26. Procédé selon l'une des revendications 20 à 25, **caractérisé** en ce que la température, l'humidité relative et, le cas échéant, le débit d'air sont régulés à l'aide d'un calculateur de processus industriel (26), et notamment sur la base de valeurs floues prédéterminées.

27. Procédé selon l'une des revendications 20 à 26, **caractérisé** en ce que l'on mesure la température et l'humidité relative de l'air du local, on transmet ces valeurs à un calculateur de processus industriel (26), et l'on régule l'installation de climatisation (16) sur la base de valeurs floues prédéterminées pour la température et l'humidité relative.

28. Procédé selon la revendication 27, **caractérisé** en ce que l'on mesure en supplément, la vitesse d'écoulement d'air de l'air sortant du local climatisé (1), et l'on régule, sur la base de ces valeurs mesurées, le débit d'air dans l'installation de climatisation (16) selon une valeur floue prédéterminée.

29. Procédé selon la revendication 27 ou 28, **caractérisé** en ce que l'on mesure la pression différentielle entre la pression dans le local climatisé (1) et la pression extérieure, et l'on régule l'écoulement d'air dans l'installation de climatisation (16) au moyen de ventilateurs (9 ; 23) selon une valeur floue prédéterminée, de façon telle que la pression dans le local climatisé (1) soit maintenue égale à la pression extérieure.

30. Procédé selon l'une des revendications 27 à 29, **caractérisé** en ce que l'on mesure la teneur en poussières de l'air sortant du local climatisé (1), et l'on détermine, sur la base de ces valeurs mesurées, une valeur minimale pour le débit d'air, et l'on régule, sur la base de cette valeur minimale, le débit d'air selon une valeur floue prédéterminée.

31. Procédé selon l'une des revendications 27 à 30, **caractérisé** en ce que l'on mesure l'énergie électrique consommée par les machines textiles (2, 3) dans le local climatisé (1), et l'on régule, sur la base de ces valeurs mesurées, la température, l'humidité relative et le débit d'air dans le local climatisé (1), selon une valeur floue prédéterminée.
